# FASCICULE DE BREVET EUROPEEN

(11) **EP 3 532 336 B1**
(45) Date de publication et mention de la délivrance du brevet: **25.11.2020**
(21) Numéro de dépôt: 17787508.5
(22) Date de dépôt: 05.10.2017
(51) Int. Cl.: H01M 10/625, H01M 10/615, H01M 10/613, H01M 10/663, H01M 10/617

(54) **DISPOSITIF ET PROCÉDÉ DE CONTRÔLE DE LA TEMPÉRATURE D'UNE BATTERIE EN FONCTION DU GRADIENT DE LA PUISSANCE ÉLECTRIQUE DÉLIVRÉE**
VORRICHTUNG UND VERFAHREN ZUR STEUERUNG DER TEMPERATUR EINER BATTERIE IN ABHÄNGIGKEIT VOM AUSGANGSGRADIENTEN DER ELEKTRISCHEN LEISTUNG
DEVICE AND METHOD FOR CONTROLLING THE TEMPERATURE OF A BATTERY AS A FUNCTION OF THE ELECTRIC POWER OUTPUT GRADIENT

(30) Priorité: 25.10.2016 FR 1660321
(43) Date de publication de la demande: 04.09.2019
(73) Titulaire: PSA Automobiles SA, 78300 Poissy (FR)
(72) Inventeur: LAURENT, Sebastien, 78690 Les Essarts Le Roi (FR); BYKOFF, Cyril, 92130 Issy Les Moulineaux (FR); GUICHARD, Stephane, 78490 Les Mesnuls (FR)
(86) Numéro de dépôt international: PCT/FR2017/052738
(87) Numéro de publication internationale: WO 2018/078233

(56) Documents cités:
- EP-A1- 0 617 846
- EP-A1- 2 321 142
- CA-A1- 2 313 527
- FR-A1- 2 819 345
- FR-A1- 2 973 298
- FR-A1- 3 005 208
- US-A1- 2014 091 772
- US-A1- 2016 117 906
- US-A1- 2016 185 250

## Description

L'invention concerne le domaine des batteries, éventuellement de type multicellulaire, qui équipent certains véhicules, et plus précisément le contrôle de la température de telles batteries.

Comme le sait l'homme de l'art, certaines batteries de véhicule ont besoin d'être contrôlées de façon quasi permanente pour que leur durée de vie et leur rendement puissent être optimisés. Ce contrôle porte non seulement sur les tensions à leurs bornes, mais également sur leur température interne, comme décrit dans le document brevet FR 2974922 ou US 2014/091772. C'est notamment le cas, bien que non limitativement, des batteries à cellules électrochimiques, comme par exemple celles de type lithium-ion (ou Li-ion).

Afin de permettre le contrôle de la température de ces batteries, et plus précisément le maintien de leur température dans une plage prédéfinie, elles comprennent généralement un boîtier couplé à un circuit de climatisation dans lequel circule un fluide (liquide ou gazeux) et dont le fonctionnement est contrôlé par au moins une commande. On comprendra que ce fluide sert soit à capturer des calories produites par la batterie lorsqu'elle délivre une forte puissance électrique consécutivement à un fort appel de courant par au moins un équipement électrique du véhicule (comme par exemple une machine motrice électrique du groupe motopropulseur (ou GMP)), soit à céder des calories à la batterie lorsqu'elle doit être réchauffée.

Initialement, chaque commande du circuit de climatisation était déterminée par des moyens de contrôle d'un dispositif de contrôle embarqué dans le véhicule, éventuellement dans un calculateur, en fonction de la dernière mesure de la température de la batterie et de la dernière valeur de la puissance électrique délivrée par la batterie.

Ce mode de détermination de chaque commande présentait un inconvénient important dans certaines situations, notamment lorsque des appels de courant importants étaient effectués en continu par des équipements électriques embarqués dans le véhicule. En effet, dans ces situations la température moyenne (interne) de la batterie augmente progressivement, plus lentement que l'évolution de la puissance électrique délivrée, et donc il arrive fréquemment que la mesure de température utilisée à un instant donné ne corresponde pas à la puissance électrique qui est délivrée par la batterie à cet instant donné du fait d'un retard au niveau de l'évolution de la température.

Afin d'améliorer la situation, il a été proposé que les moyens de contrôle déterminent chaque commande de façon périodique, par exemple toutes les 120 secondes, en utilisant comme valeur de puissance électrique une moyenne de toutes les puissances électriques ayant été délivrées par la batterie durant la dernière période écoulée. Cependant, il arrive fréquemment que chaque commande déterminée lors d'une fin de période ne soit plus en adéquation avec le besoin réel de courant de refroidissement ou de réchauffement de la batterie du fait du moyennage des puissances électriques délivrées sur la période écoulée. On comprendra en effet que ce moyennage ne permet pas de savoir à l'instant considéré si l'on est dans une phase où la demande de puissance électrique est croissante (ce qui risque d'induire une augmentation de la température) ou dans une phase où la demande de puissance électrique est décroissante (ce qui risque d'induire une diminution de la température).

Pour améliorer la situation on pourrait utiliser une valeur représentative d'une moyenne glissante des puissances électriques, calculée en continue sur les N dernières secondes. Mais cette solution présente deux inconvénients. En effet, elle nécessite une mémorisation d'un grand nombre de mesures de puissances électriques, ce qui est difficile, voire impossible, à réaliser au moyen des calculateurs actuels de certains véhicules, notamment automobiles. De plus, que l'on soit dans une phase de demande de puissance électrique croissante ou dans une phase de demande de puissance électrique décroissante, les commandes déterminées seront les mêmes pour une même mesure de temprétaure, ce qui ne permet pas d'adapter la réactivité du refroidissement en fonction du besoin réel de puissance électrique demandé à la batterie.

L'invention a donc notamment pour but d'améliorer la situation.

Elle propose notamment à cet effet un dispositif, d'une part, destiné à contrôler la température d'une batterie délivrant une puissance électrique variable pour alimenter au moins un équipement électrique d'un véhicule qui comprend un circuit de climatisation échangeant des calories avec cette batterie via une vanne, en fonction de commandes, et, d'autre part, comprenant des moyens de contrôle agencés pour déterminer chaque commande en fonction d'une dernière mesure de la température de la batterie et d'une valeur qui est représentative de puissances électriques (instantanées) venant d'être délivrées par la batterie.

Ce dispositif se caractérise par le fait que ses moyens de contrôle sont agencés pour déterminer un gradient de la puissance électrique délivrée par la batterie dans une période choisie, puis pour déterminer une durée de prise en compte en fonction de ce gradient déterminé, puis pour déterminer la valeur à partir de puissances électriques (instantanées - c'est-à-dire toutes ou seulement certaines) délivrées par la batterie pendant la durée de prise en compte déterminée.

Cette utilisation de durées de prise en compte différentes selon le gradient de la puissance électrique permet avantageusement d'adapter la réactivité de la pompe du circuit d eclimatisation et de la vanne, et donc la climatisation de la batterie, en fonction du besoin réel de puissance électrique demandé à la batterie, ce qui permet de prendre en compte l'inertie de l'évolution de la température.

Le dispositif selon l'invention peut comporter d'autres caractéristiques qui peuvent être prises séparément ou en combinaison, et notamment :
- ses moyens de contrôle peuvent être agencés pour déterminer soit une première durée de prise en compte prédéfinie lorsque le gradient déterminé est positif, soit une seconde durée de prise en compte prédéfinie, différente de la première durée de prise en compte, lorsque le gradient déterminé est négatif ;
   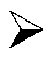 ses moyens de contrôle peuvent être agencés pour utiliser une première durée de prise en compte qui est strictement inférieure à la seconde durée de prise en compte ;
      - ses moyens de contrôle peuvent être agencés pour utiliser une première durée de prise en compte qui est comprise entre une seconde et plusieurs minutes ;
      - ses moyens de contrôle peuvent être agencés pour utiliser une seconde durée de prise en compte qui est comprise entre quelques secondes et une dizaine de minutes ;
- ses moyens de contrôle peuvent être agencés pour déterminer chaque commande en fonction d'une table établissant une correspondance entre, d'une part, des couples comprenant chacun une mesure de température de la batterie et une valeur représentative de puissances électriques délivrées par la batterie, et, d'autre part, des commandes du circuit de climatisation et de la vanne qui pilote le débit du fluide de refroidissement de la batterie.

L'invention propose également un calculateur, d'une part, destiné à équiper un véhicule comprenant une batterie délivrant une puissance électrique variable pour alimenter au moins un équipement électrique embarqué et un circuit de climatisation échangeant des calories avec cette batterie via une vanne, en fonction de commandes, et, d'autre part, comportant un dispositif de contrôle du type de celui présenté ci-avant.

L'invention propose également un véhicule, éventuellement de type automobile, et comprenant une batterie délivrant une puissance électrique variable pour alimenter au moins un équipement électrique embarqué, un circuit de climatisation échangeant des calories avec cette batterie via une vanne, en fonction de commandes, et un calculateur du type de celui présenté ci-avant ou un dispositif de contrôle du type de celui présenté ci-avant.

Un tel véhicule peut, par exemple, comprendre un groupe motopropulseur (ou GMP) comportant au moins un équipement électrique agencé sous la forme d'une machine motrice électrique. Dans ce cas, le GMP peut être de type tout électrique ou hybride.

L'invention propose également un procédé, d'une part, destiné à permettre le contrôle de la température d'une batterie délivrant une puissance électrique variable pour alimenter au moins un équipement électrique d'un véhicule comprenant un circuit de climatisation échangeant des calories avec cette batterie via une vanne, en fonction de commandes, et, d'autre part, comprenant une étape dans laquelle on détermine chaque commande en fonction d'une dernière mesure de la température de la batterie et d'une valeur représentative de puissances électriques venant d'être délivrées par la batterie.

Ce procédé se caractérise par le fait que dans son étape on détermine un gradient de la puissance électrique délivrée par la batterie dans une période choisie, puis on détermine une durée de prise en compte en fonction de ce gradient déterminé, puis on détermine la valeur précitée à partir de puissances électriques délivrées par la batterie pendant cette durée de prise en compte déterminée.

D'autres caractéristiques et avantages de l'invention apparaîtront à l'examen de la description détaillée ci-après, et des dessins annexés, sur lesquels:

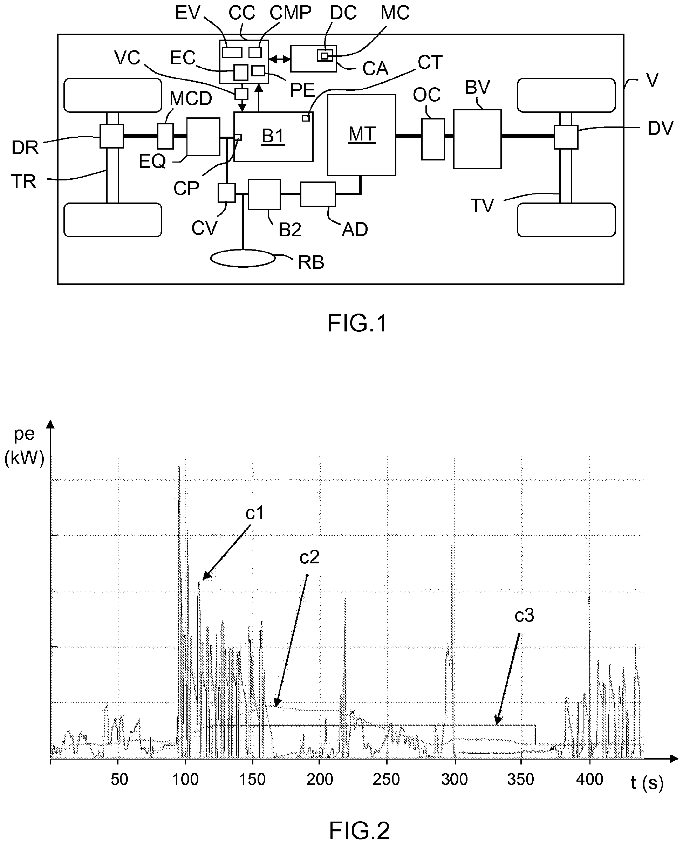

- la figure 1 illustre schématiquement et fonctionnellement un exemple de véhicule comportant un GMP hybride et une batterie couplée à un circuit de climatisation contrôlé par un exemple de dispositif de contrôle selon l'invention et à un équipement électrique, et
- la figure 2 illustre schématiquement au sein d'un diagramme d'évolution temporelle d'un exemple de puissance électrique réelle (c1) d'un véhicule hybride, d'un exemple de puissance électrique (c2) déterminée à partie de c1 en fonction de la durée de prise en compte, et d'un exemple de puissance électrique moyenne (c3), ici moyennée sur 120 s.

L'invention a notamment pour but de proposer un dispositif de contrôle DC, et un procédé de contrôle associé, destinés à contrôler au sein d'un véhicule V la température d'une batterie B1 chargée de délivrer une puissance électrique variable pour alimenter au moins un équipement électrique EQ embarqué.

Dans ce qui suit, on considère à titre d'exemple non limitatif que la batterie B1 fait partie d'un véhicule de type automobile, comme par exemple une voiture. Mais l'invention n'est pas limitée à ce type de véhicule. Elle concerne en effet tout type de véhicule terrestre ou maritime (ou fluvial).

Par ailleurs, on considère dans ce qui suit, à titre d'exemple non limitatif, que le véhicule comprend un groupe motopropulseur (ou GMP) de type hybride. Mais son GMP pourrait être de type tout électrique, par exemple. L'invention concerne en effet tout particulièrement les batteries de véhicule pouvant faire l'objet de fortes variations de température du fait des variations importantes de la puissance électrique demandée par un ou plusieurs équipements électriques embarqués. C'est donc notamment le cas des batteries des véhicules à GMP de type hybride ou tout électrique.

On a schématiquement représenté sur la figure 1 un véhicule V comprenant une chaîne de transmission hybride (ici parallèle à titre d'exemple), et un dispositif de contrôle DC selon l'invention.

La chaîne de transmission (ici hybride parallèle) comprend un groupe motopropulseur (ou GMP) hybride dont le fonctionnement est supervisé (ou géré) par un calculateur de supervision non représenté, un premier organe de couplage OC, une boîte de vitesses BV, et un éventuel moyen de couplage/découplage MCD.

Le GMP (ici hybride) comprend notamment un moteur thermique MT, une machine motrice électrique EQ, et une batterie B1.

On entend ici par « moteur thermique MT » un moteur consommant du carburant ou des produits chimiques.

Le moteur thermique MT comprend un vilebrequin (non représenté) qui est solidarisé fixement à un arbre moteur afin d'entraîner ce dernier en rotation.

La boîte de vitesses BV est, par exemple, manuelle. Elle comprend au moins un arbre d'entrée (ou primaire) destiné à recevoir le couple produit par le moteur thermique MT via l'organe de couplage OC, et un arbre de sortie destiné à recevoir ce couple via l'arbre d'entrée afin de le communiquer à un arbre de transmission auquel il est couplé et qui est couplé indirectement aux roues (ici du train avant TV du véhicule V), de préférence via un différentiel avant DV.

Par exemple, l'organe de couplage OC est un embrayage comprenant un volant moteur solidarisé fixement à l'arbre moteur et un disque d'embrayage solidarisé fixement à l'arbre d'entrée de la boîte de vitesses BV.

La machine motrice électrique EQ est destinée à fournir du couple pour déplacer le véhicule V, soit seul(e), soit en complément du moteur thermique MT. A cet effet, la machine motrice électrique EQ est couplée à la batterie B1, éventuellement via un onduleur (non représenté). Par exemple, la batterie B1 est de type basse tension (par exemple et non limitativement environ 220 V ou 100 V).

A titre d'exemple non limitatif, la batterie B1 peut être de type multicellulaire. Dans ce cas, elle comporte un boîtier contenant des cellules de stockage d'énergie électrique, par exemple de type lithium-ion (ou Li-ion) ou Ni-Mh ou plomb.

Ce boîtier est couplé à un circuit de climatisation CC dans lequel circule un fluide (liquide ou gazeux) destiné à échanger des calories avec la batterie B1, et dont le fonctionnement est contrôlé par au moins une commande déterminée par le dispositif de contrôle DC selon l'invention, sur lequel on reviendra plus loin. Par exemple, ce circuit de climatisation CC comprend des premier et second sous-circuits.

Le premier sous-circuit est couplé au boîtier de la batterie B1 et comprend un échangeur de chaleur EC et une pompe électrique PE chargée de faire circuler le fluide d'échange de calories dans le boîtier et dans l'échangeur de chaleur EC.

Le fluide d'échange de calories sert soit à capturer des calories produites par la batterie B1 lorsqu'elle délivre une forte puissance électrique consécutivement à un fort appel de courant par au moins un équipement électrique du véhicule V, soit à céder des calories à la batterie B1 lorsqu'elle doit être réchauffée.

Le second sous-circuit est couplé à l'échangeur de chaleur EC et comprend, par exemple et notamment, un évaporateur EV et un compresseur CMP, par exemple à cylindrée variable ou à embrayage, et chargé d'alimenter l'échangeur de chaleur EC et l'évaporateur EV avec un autre fluide caloporteur.

On notera que le circuit de climatisation CC est au moins agencé de manière à refroidir la batterie B1, et qu'il peut être également et éventuellement agencé de manière à réchauffer la batterie B1 en cas de besoin.

On notera également qu'il existe une vanne VC entre la sortie du circuit de climatisation CC et la batterie B1. Cette vanne VC est chargée de contrôler le débit du fluide de refroidissement qui alimente la batterie B1. Son fonctionnement est contrôlé par une commande déterminée par le dispositif de contrôle DC.

Par ailleurs, la batterie B1 est équipée d'un capteur de température CT chargé de mesurer sa température interne en au moins un endoit choisi, et d'un capteur de puissance CP chargé de mesurer la puissance électrique instantanée pe qu'elle délivre (en sortie) pour alimenter au moins un équipement électrique embarqué, et notamment, ici, la machine motrice électrique EQ.

L'éventuel moyen de couplage/découplage MCD peut être chargé de coupler/découpler la machine motrice électrique EQ à un/d'un arbre de transmission afin de communiquer le couple qu'il produit grâce à l'énergie stockée dans la batterie B1. Cet arbre de transmission est chargé d'entraîner en rotation des roues d'un train. Cet éventuel moyen de couplage/découplage MCD est par exemple un mécanisme à crabots ou un embrayage.

On notera que dans l'exemple de réalisation illustré non limitativement sur la figure 1, le moyen de couplage/découplage MCD est chargé de coupler/découpler la machine motrice électrique EQ à un/d'un arbre de transmission qui est différent de celui auquel est couplé le moteur thermique MT (via l'organe de couplage OC). Ce couplage/découplage se fait ici sur le train arrière TR du véhicule V, via un différentiel arrière DR, à titre d'exemple illustratif. Mais dans une variante de réalisation non illustrée, le moyen de couplage/découplage MCD pourrait être chargé de coupler/découpler la machine motrice électrique EQ à/de l'arbre de transmission auquel est couplé le moteur thermique MT (via l'organe de couplage OC), en aval de la boîte de vitesses BV.

La chaine de transmission comprend également une machine électrique AD (démarreur ou alterno-démarreur) qui est couplée au moteur thermique MT, notamment pour le lancer lors d'un démarrage. Cette machine électrique AD peut être couplée à une batterie de servitude B2, par exemple de type très basse tension (par exemple 12 V, 24 V ou 48V), comme illustré non limitativement sur la figure 1. Mais en variante cette machine électrique AD pourrait être couplée à la batterie B1.

On peut également prévoir un convertisseur CV de type DC/DC entre la batterie B1 et la batterie de servitude B2, de manière à assurer l'alimentation du réseau de bord RB du véhicule V si la machine électrique AD fonctionne sous 220 V.

Comme illustré non limitativement sur la figure 1, un dispositif de contrôle DC, selon l'invention, comprend principalement des moyens de contrôle MC.

On notera que dans l'exemple non limitatif illustré sur la figure 1, le dispositif de contrôle DC fait partie d'un calculateur CA. Ce dernier (CA) peut être dédié au contrôle de la température de la batterie B1 ou bien être dédié à plusieurs fonctions (ainsi, il pourrait s'agir du calculateur de supervision du GMP ou de l'ordinateur de bord). Mais le dispositif de contrôle DC pourrait être un équipement comportant éventuellement un calculateur. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Les moyens de contrôle MC sont agencés pour déterminer chaque commande du circuit de climatisation CC en fonction de la dernière mesure de la température de la batterie B1 (délivrée par le capteur de température CT) et d'une valeur v_{PE} qui est représentative de puissances électriques instantanées (toutes ou seulement certaines) venant d'être délivrées par la batterie B1 (et mesurées par le capteur de puissance CP).

Pour ce faire, les moyens de contrôle MC sont agencés pour déterminer un gradient g_{PE} de la puissance électrique qui est délivrée par la batterie B1 dans une période choisie, puis pour déterminer une durée de prise en compte df en fonction de ce gradient g_{PE} déterminé, puis pour déterminer la valeur v_{PE} à partir de puissances électriques (instantanées) qui sont délivrées par la batterie B1 pendant la durée de prise en compte df déterminée. On comprendra que cette valeur v_{PE} est utilisée avec la dernière mesure de la température de la batterie B1 pour déterminer chaque commande du circuit de climatisation CC.

La période choisie est égale à un multiple entier de l'intervalle temporel (ou pas de mesures) entre deux mesures successives effectuées par le capteur de puissance CP. Par exemple, elle peut être comprise entre 100 ms et 1 s.

Lorsque la période choisie est égale à t2 - t1, le gradient g_{PE} est égal à [pe(t2) - pe(t1)] / [t2 - t1], ou pe(t2) est la puissance électrique instantanée mesurée à l'instant t2 et pe(t1) est la puissance électrique instantanée mesurée à l'instant t1.

Grâce à cette utilisation de durées de prise en compte df différentes selon le gradient de la puissance électrique g_{PE}, il est désormais possible d'adapter la réactivité de la pompe PE et de la vanne VC, et donc la climatisation de la batterie B1 (et en particulier son refroidissement) en fonction du besoin réel de puissance électrique qui est demandé à la batterie B1 (notamment par la machine motrice électrique EQ). Cela permet avantageusement de prendre en compte l'inertie de l'évolution de la température et donc de réduire notablement le décalage temporel entre l'instant où l'on doit faire fonctionner les actionneurs du circuit de climatisation CC et l'instant où l'on a effectivement besoin de refroidir (ou réchauffer) la batterie B1. De plus, cela permet de faire fonctionner la batterie B1 dans sa zone de température optimale, ce qui permet d'augmenter son rendement et sa durée de vie.

Par exemple, la valeur v_{PE} peut être déterminée en fonction des puissances électriques (instantanées) pe qui sont délivrées par la batterie B1 pendant la durée de prise en compte df déterminée et qui correspondent au gradient g_{PE} déterminé.

Par exemple, les moyens de contrôle MC peuvent être agencés pour déterminer chaque commande d'un actionneur du circuit de climatisation CC en fonction d'une table qui établit une correspondance entre, d'une part, des couples comprenant chacun une mesure de température de la batterie B1 et une valeur v_{PE} représentative de puissances électriques délivrées par la batterie B1, et, d'autre part, des commandes du circuit de climatisation CC et de la vanne VC. Cette table de correspondance (ou cartographie) est par exemple stockée dans une mémoire (éventuellement logicielle) du dispositif de contrôle DC, et faisant éventuellement partie des moyens de contrôle MC.

On notera que le circuit de climatisation CC peut être piloté par un ou plusieurs actionneurs contrôlés chacun par une commande devant être déterminée par les moyens de contrôle MC. Par exemple une première commande peut être destinée à l'actionneur de la pompe électrique PE, et une seconde commande peut être destinée à l'actionneur de l'échangeur de chaleur EC. De même, la vanne VC est pilotée par un actionneur contrôlé par une commande devant être déterminée par les moyens de contrôle MC.

Lorsque l'on utilise N commandes (avec N ≥ 2), on peut prévoir soit une unique table (ou cartographie) établissant une correspondance entre, d'une part, des couples comprenant chacun une mesure de température de la batterie B1 et une valeur v_{PE} représentative de puissances électriques délivrées par la batterie B1, et, d'autre part, des muliplets de N commandes du circuit de climatisation CC, soit N sous-tables (ou cartographies) établissant chacune une correspondance entre, d'une part, des couples comprenant chacun une mesure de température de la batterie B1 et une valeur v_{PE} représentative de puissances électriques délivrées par la batterie B1, et, d'autre part, des commandes de l'un des N actionneurs du circuit de climatisation CC.

La table (ou cartographie) peut être déterminée sur un banc d'essai en laboratoire, ou bien lors d'une campagne de tests sur route ou piste d'essai. Par ailleurs, la table est fonction au moins de l'agencement de la batterie B1 et de l'agencement du circuit de climatisation CC du véhicule V considéré, ainsi qu'éventuellement de l'environnement de la batterie B1.

Dans un mode de réalisation particulier, les moyens de contrôle MC peuvent être agencés pour déterminer soit une première durée de prise en compte df1 prédéfinie lorsque le gradient g_{PE} déterminé est positif (soit g_{PE} > 0), soit une seconde durée de prise en compte df2 prédéfinie lorsque le gradient g_{PE} déterminé est négatif (soit g_{PE} < 0). En d'autres termes, dans cette option les moyens de contrôle MC ne prennent en considération que le signe courant du gradient g_{PE} déterminé, afin de déterminer si l'on est en présence d'une augmentation de la puissance électrique délivrée (g_{PE} > 0) ou d'une diminution de la puissance électrique délivrée (g_{PE} < 0).

En présence de l'option décrite ci-avant, les moyens de contrôle MC peuvent être agencés pour utiliser une première durée de prise en compte df1 (associée à g_{PE} > 0), strictement inférieure à la seconde durée de prise en compte df2 (associée à g_{PE} < 0), soit df1 < df2. On considère ainsi qu'une augmentation de la puissance électrique délivrée va induire une augmentation de la température interne de la batterie B1 à laquelle il faut immédiatement s'opposer par un refroidissement de manière anticipative. En revanche, une diminution de la puissance électrique délivrée ne risque pas d'induire une augmentation de la température interne de la batterie B1, même si une petite augmentation demeure possible du fait de l'inertie, et donc le besoin de refroidissement de la batterie est moindre.

Par exemple, les moyens de contrôle MC peuvent être agencés pour utiliser une première durée de prise en compte df1 comprise entre une seconde et plusieurs minutes.

Egalement par exemple, les moyens de contrôle MC peuvent être agencés pour utiliser une seconde durée de prise en compte df2 comprise entre quelques secondes et une dizaine de minutes.

On a schématiquement illustré sur la figure 2 un diagramme d'évolution temporelle d'un exemple de puissance électrique réelle c1 d'un véhicule hybride, d'un exemple de puissance électrique c2 résultant du choix de durée de prise en compte effectué à partir de c1 par un dispositif de contrôle DC (avec df1 = 50 s, df2 = 100 s et période (ou pas de mesures) égale à 100 ms), et d'un exemple de puissance électrique c3 résultant d'une moyenne effectuée sur c1 sur des périodes de 120 s par un dispositif de contrôle de l'art antérieur.

Cet exemple montre la réactivité notablement plus grande résultant de l'action du dispositif de contrôle DC comparativement à celle obtenue avec un dispositif de contrôle de l'art antérieur. Cela est plus particulièrement notable lors d'une phase de faible demande de puissance électrique entre les instants t1 = 230 et t2 = 280 car c2 correspond assez bien à c1 (après le choix de durée de prise en compte) alors que la moyenne de c3 demeure trop importante, et lors d'une phase de moyenne demande de puissance électrique après l'instant t3 = 410 car c2 correspond assez bien à c1 (après le choix de durée de prise en compte) alors que la moyenne de c3 demeure trop basse.

Il est important de noter que l'invention peut être également considérée sous l'angle d'un procédé de contrôle, pouvant être notamment mis en œuvre au moyen d'un dispositif de contrôle DC du type de celui présenté ci-avant. Les fonctionnalités offertes par la mise en œuvre du procédé selon l'invention étant identiques à celles offertes par le dispositif de contrôle DC présenté ci-avant, seule la combinaison de fonctionnalités principales offerte par le procédé est présentée ci-après.

Ce procédé de contrôle comprend une étape dans laquelle :
- on détermine un gradient de la puissance électrique délivrée par la batterie B1 dans une période choisie, puis
- on détermine une durée de prise en compte en fonction de ce gradient déterminé, puis
- on détermine une valeur représentative de puissances électriques (toutes ou certaines) venant d'être délivrées par la batterie B1 pendant cette durée de prise en compte déterminée, puis
- on détermine chaque commande en fonction d'une dernière mesure de la température de la batterie B1 et de cette valeur déterminée.

## Revendications

1. Dispositif (DC) de contrôle de la température d'une batterie (B1) délivrant une puissance électrique variable pour alimenter au moins un équipement électrique (EQ) d'un véhicule (V) comprenant un circuit de climatisation (CC) échangeant des calories avec ladite batterie (B1) via une vanne (VC), en fonction de commandes, ledit dispositif (DC) comprenant des moyens de contrôle (MC) agencés pour déterminer chaque commande en fonction d'une dernière mesure de ladite température de la batterie (B1) et d'une valeur (v_{PE}) représentative de puissances électriques venant d'être délivrées par ladite batterie (B1), **caractérisé en ce que** lesdits moyens de contrôle (MC) sont agencés pour déterminer un gradient (g_{PE}) de ladite puissance électrique délivrée par ladite batterie (B1) dans une période choisie, puis pour déterminer une durée de prise en compte (df) en fonction dudit gradient (g_{PE}) déterminé, puis pour déterminer ladite valeur (v_{PE}) à partir de puissances électriques délivrées par ladite batterie (B1) pendant ladite durée de prise en compte (df) déterminée.

2. Dispositif selon la revendication 1, **caractérisé en ce que** lesdits moyens de contrôle (MC) sont agencés pour déterminer soit une première durée de prise en compte prédéfinie (df1) lorsque ledit gradient (g_{PE}) déterminé est positif, soit une seconde durée de prise en compte prédéfinie (df2), différente de ladite première durée de prise en compte (df1), lorsque ledit gradient (g_{PE}) déterminé est négatif.

3. Dispositif selon la revendication 2, **caractérisé en ce que** lesdits moyens de contrôle (MC) sont agencés pour utiliser une première durée de prise en compte (df1) strictement inférieure à ladite seconde durée de prise en compte (df2).

4. Dispositif selon la revendication 3, **caractérisé en ce que** lesdits moyens de contrôle (MC) sont agencés pour utiliser une première durée de prise en compte (df1) comprise entre une seconde et plusieurs minutes.

5. Dispositif selon l'une des revendications 3 et 4, **caractérisé en ce que** lesdits moyens de contrôle (MC) sont agencés pour utiliser une seconde durée de prise en compte (df2) comprise entre quelques secondes et une dizaine de minutes.

6. Dispositif selon l'une des revendications 1 à 5, **caractérisé en ce que** lesdits moyens de contrôle (MC) sont agencés pour déterminer chaque commande en fonction d'une table établissant une correspondance entre, d'une part, des couples comprenant chacun une mesure de température de ladite batterie (B1) et une valeur représentative de puissances électriques délivrées par ladite batterie (B1), et, d'autre part, des commandes dudit circuit de climatisation (CC).

7. Calculateur (CA) pour un véhicule (V) comprenant i) une batterie (B1) délivrant une puissance électrique variable pour alimenter au moins un équipement électrique (EQ) embarqué et ii) un circuit de climatisation (CC) échangeant des calories avec ladite batterie (B1) via une vanne (VC), en fonction de commandes, **caractérisé en ce qu'**il comprend un dispositif de contrôle (DC) selon l'une des revendications précédentes.

8. Véhicule (V) comprenant i) une batterie (B1) délivrant une puissance électrique variable pour alimenter au moins un équipement électrique (EQ) embarqué et ii) un circuit de climatisation (CC) échangeant des calories avec ladite batterie (B1) via une vanne (VC), en fonction de commandes, **caractérisé en ce qu'**il comprend en outre un calculateur (CA) selon la revendication 7 ou un dispositif de contrôle (DC) selon l'une des revendications 1 à 6.

9. Véhicule selon la revendication 8, **caractérisé en ce qu'**il comprend un groupe motopropulseur comportant au moins un équipement électrique (EQ) agencé sous la forme d'une machine motrice électrique.

10. Procédé de contrôle de la température d'une batterie (B1) délivrant une puissance électrique variable pour alimenter au moins un équipement électrique (EQ) d'un véhicule (V) comprenant un circuit de climatisation (CC) échangeant des calories avec ladite batterie (B1) via une vanne (VC), en fonction de commandes, ledit procédé (DC) comprenant une étape dans laquelle on détermine chaque commande en fonction d'une dernière mesure de ladite température de la batterie (B1) et d'une valeur représentative (v_{PE}) de puissances électriques venant d'être délivrées par ladite batterie (B1), **caractérisé en ce que** dans ladite étape on détermine un gradient (g_{PE}) de ladite puissance électrique délivrée par ladite batterie (B1) dans une période choisie, puis on détermine une durée de prise en compte (df) en fonction dudit gradient (g_{PE}) déterminé, puis on détermine ladite valeur (v_{PE}) à partir de puissances électriques délivrées par ladite batterie (B1) pendant ladite durée de prise en compte (df) déterminée.

## Patentansprüche

1. Vorrichtung (DC) zum Steuern der Temperatur einer Batterie (B1), die eine variable elektrische Leistung liefert, um mindestens eine elektrische Ausrüstung (EQ) eines Fahrzeugs (V) zu versorgen, die einen Austausch eines Klimaanlagenkreises (CC) umfasst Kalorien mit der Batterie (B1) über ein Ventil (VC) als Funktion von Befehlen, wobei die Vorrichtung (DC) Steuermittel (MC) umfasst, die angeordnet sind, um jeden Befehl als Funktion einer letzten Messung der Temperatur der Batterie zu bestimmen (B1) und eines Wertes (vPE), der für die gerade von der Batterie (B1) gelieferten elektrischen Leistungen repräsentativ ist und **dadurch gekennzeichnet ist, dass** die Steuermittel (MC) so angeordnet sind, dass sie einen Gradienten (gPE) der Leistung bestimmen elektrische Energie, die von der Batterie (B1) in einem gewählten Zeitraum geliefert wird, um dann eine Dauer der Berücksichtigung (df) als Funktion des bestimmten Gradienten (gPE) zu bestimmen, um dann den Wert (vPE) aus elektrischen Energien zu bestimmen, die von ladi geliefert werden die Batterie (B1) während der unter Berücksichtigung der Zeit (df) bestimmten.

2. Vorrichtung nach Anspruch 1, **gekennzeichnet dadurch, dass** die Steuermittel (MC) so angeordnet sind, dass sie entweder eine erste vordefinierte Dauer der Berücksichtigung (df1) bestimmen, wenn der bestimmte Gradient (gPE) positiv ist, oder eine zweite Dauer der Berücksichtigung. vordefinierte Anzahl (df2), die sich von der ersten Betrachtungsdauer (df1) unterscheidet, wenn der bestimmte Gradient (gPE) negativ ist.

3. Vorrichtung nach Anspruch 2, **dadurch gekennzeichnet, dass** die Steuermittel (MC) so angeordnet sind, dass sie eine erste unter Berücksichtigung der Dauer (df1) verwenden, die strikt geringer ist als die zweite unter Berücksichtigung der Dauer (df2).

4. Vorrichtung nach Anspruch 3, **dadurch gekennzeichnet, dass** die Steuermittel (MC) so angeordnet sind, dass sie eine erste unter Berücksichtigung der Zeit (df1) zwischen einer Sekunde und mehreren Minuten verwenden.

5. Vorrichtung nach einem der Ansprüche 3 und 4, **gekennzeichnet dadurch, dass** die Steuermittel (MC) so angeordnet sind, dass sie eine Sekunde unter Berücksichtigung der Zeit (df2) zwischen einigen Sekunden und zehn Minuten verwenden.

6. Vorrichtung nach einem der Ansprüche 1 bis 5, **gekennzeichnet dadurch, dass** die Steuermittel (MC) angeordnet sind, um jeden Befehl als Funktion einer Tabelle zu bestimmen, die eine Entsprechung zwischen einerseits Paaren herstellt, die jeweils umfassen eine Temperaturmessung der Batterie (B1) und eines Wertes, der für die von der Batterie (B1) gelieferten elektrischen Leistungen und andererseits für die Steuerungen des Klimakreises (CC) repräsentativ ist.

7. Computer (CA) für ein Fahrzeug (V), umfassend i) eine Batterie (B1), die variable elektrische Leistung liefert, um mindestens ein elektrisches Bordgerät (EQ) zu versorgen, und ii) einen Klimakreislauf (CC), mit dem Kalorien ausgetauscht werden wobei die Batterie (B1) über ein Ventil (VC) gemäß Befehlen **dadurch gekennzeichnet ist, dass** sie eine Steuervorrichtung (DC) gemäß einem der vorhergehenden Ansprüche umfasst.

8. Fahrzeug (V), umfassend i) eine Batterie (B1), die variable elektrische Leistung liefert, um mindestens ein elektrisches Bordgerät (EQ) zu versorgen, und ii) einen Klimakreis (CC), über den Kalorien mit der Batterie (B1) ausgetauscht werden ein Ventil (VC), abhängig von Befehlen, **dadurch gekennzeichnet, dass** es ferner einen Computer (CA) nach Anspruch 7 oder eine Steuervorrichtung (DC) nach einem der Ansprüche 1 bis 6 umfasst.

9. Fahrzeug nach Anspruch 8, **dadurch gekennzeichnet, dass** es einen Antriebsstrang umfasst, der mindestens eine elektrische Ausrüstung (EQ) umfasst, die in Form einer elektrischen Antriebsmaschine angeordnet ist.

10. Verfahren zum Steuern der Temperatur einer Batterie (B1), die eine variable elektrische Leistung liefert, um mindestens ein elektrisches Gerät (EQ) eines Fahrzeugs (V) zu versorgen, das einen Klimakreis (CC) umfasst, der Kalorien mit der Vorrichtung austauscht. Batterie (B1) über ein Ventil (VC) als Funktion von Befehlen, wobei das Verfahren (DC) einen Schritt umfasst, in dem jeder Befehl als Funktion einer letzten Messung der Temperatur der Batterie (B1) und von a bestimmt wird repräsentativer Wert (vPE) der gerade von der Batterie (B1) gelieferten elektrischen Leistung, **gekennzeichnet dadurch, dass** in dem Schritt ein Gradient (gPE) der von der Batterie (B1) gelieferten elektrischen Leistung in einem gewählten Zeitraum bestimmt wird; dann wird eine Dauer der Berücksichtigung (df) als Funktion des bestimmten Gradienten (gPE) bestimmt, dann wird der Wert (vPE) aus den von der Batterie (B1) während der Dauer der Berücksichtigung (df) gelieferten elektrischen Leistungen bestimmt) entschlossen.

## Claims

1. Device (DC) for controlling the temperature of a battery (B1) delivering a variable electrical power to supply at least one electrical equipment (EQ) of a vehicle (V) comprising an air conditioning circuit (CC) exchanging calories with said battery (B1) via a valve (VC), as a function of commands, said device (DC) comprising control means (MC) arranged to determine each command as a function of a last measurement of said temperature of the battery (B1) and of a value (v_{PE}) representative of electrical powers just delivered by said battery (B1), **characterized in that** said control means (MC) are arranged to determine a gradient (g_{PE}) of said electrical power delivered by said battery (B1) in a chosen period, then to determine period of consideration (df) for taking into account as a function of said determined gradient (g_{PE}), then to determine said value (v_{PE}) from electrical powers delivered by said battery (B1) during I said determined period of consideration (df).

2. Device according to Claim 1, **characterized in that** said control means (MC) are arranged to determine either a first predefined (df1) taking into account duration when said determined gradient (g_{PE}) is positive, or a second predefined (df2) taking into account duration, different from said first predefined (df1) taken into account, when said determined gradient (g_{PE}) is negative.

3. Device according to Claim 2, **characterized in that** the said control means (MC) are arranged to use a first predefined (df1) taking into account duration strictly less than the said second (df2) taking into account duration.

4. Device according to Claim 3, **characterized in that** the said control means (MC) are arranged to use a predefined (df1) taking into account duration of between one second and several minutes

5. Device according to one of Claims 3 and 4, **characterized in that** the said control means (MC) are arranged to use a second predefined (df2) taking into account duration of between a few seconds and around ten minutes.

6. Device according to one of claims 1 to 5, **characterized in that** said control means (MC) are arranged to determine each command as a function of a table establishing a correspondence between, on the one hand, pairs each comprising a measurement temperature of said battery (B1) and a value representative of electrical power delivered by said battery (B1), and, on the other hand, of the controls of said air conditioning circuit (CC).

7. Computer (CA) for a vehicle (V) comprising i) a battery (B1) delivering variable electrical power to supply at least one on-board electrical equipment (EQ) and ii) an air conditioning circuit (CC) exchanging calories with said battery (B1) via a valve (VC), depending on commands, **characterized in that** it comprises a control device (DC) according to one of the preceding claims.

8. Vehicle (V) comprising i) a battery (B1) delivering variable electrical power to supply at least one on-board electrical equipment (EQ) and ii) an air conditioning circuit (CC) exchanging calories with said battery (B1) via a valve (VC), as a function of commands, **characterized in that** it further comprises a computer (CA) according to claim 7 or a control device (DC) according to one of claims 1 to 6.

9. Vehicle according to Claim 8, **characterized in that** it comprises a drive train comprising at least one electrical equipment (EQ) arranged in the form of an electrical driving machine.

10. Method of controlling the temperature of a battery (B1) delivering variable electrical power to supply at least one electrical equipment (EQ) of a vehicle (V) comprising an air conditioning circuit (CC) exchanging calories with said battery (B1) via a valve (VC), as a function of commands, said method (DC) comprising a step in which each command is determined as a function of a last measurement of said battery temperature (B1) and of a representative value (v_{PE}) of electrical powers having just been delivered by said battery (B1), **characterized in that** in said step a gradient (g_{PE}) of said electrical power delivered by said battery (B1) is determined in a chosen period, then a hold duration (df) is determined count as a function of said determined gradient (g_{PE}), then said value (v_{PE}) is determined from electrical powers delivered by said battery (B1) during said determined taking into account period (df).
